# EUROPEAN PATENT APPLICATION

(11) **EP 1 987 892 A1**
(43) Date of publication of application: **05.11.2008**
(21) Application number: 07708341.8
(22) Date of filing: 13.02.2007
(51) Int. Cl.: B05D 1/18, B05D 7/24, C08J 9/42, H01B 13/00, H01M 8/02, H01M 8/10

(54) **METHOD FOR PRODUCING FUNCTIONAL MEMBRANE**

(30) Priority: 15.02.2006 JP 2006037427
(71) Applicant: TOAGOSEI CO., LTD., Minato-ku Tokyo 105-8419 (JP)
(72) Inventor: SATO, Daigo, Nagoya-shi Aichi 455-0027 (JP); HIRAOKA, Hideki, Nagoya-shi Aichi 455-0027 (JP)
(74) Representative: Wilhelms · Kilian & Partner Patentanwälte
(86) International application number: PCT/JP2007/052450
(87) International publication number: WO 2007/094279

(57) **Abstract**

A method is provided for producing a functional membrane having a structure in which pores of a porous substrate are filled with a functional polymer, the method having improved productivity and improving the stability of performance.

The method for producing a functional membrane formed by filling pores of a porous substrate with a functional polymer involves carrying out a treatment of the porous substrate with a suspension of a surfactant before filling the pores of the porous substrate with a solution of the functional polymer or a solution of a precursor thereof, carrying out a drying step, and then filling with the solution of the functional polymer or the solution of the precursor thereof.

## Description

The present invention relates to a process for producing a functional membrane, the functional membrane thus obtained being particularly suitable as an electrolyte membrane for a fuel cell.

With regard to a functional membrane in which pores of a porous substrate are filled with a functional polymer such as an ionically conductive polymer, applications in various fields such as electrolyte membranes for fuel cells or separation membranes for medical use are under investigation.

An example of application of a functional membrane to a fuel cell is explained below. In recent years, the application of direct methanol fuel cells (DMFC) in power sources for portable equipment has been anticipated. A DMFC generates power by a series of reactions in which methanol and water are supplied to a fuel electrode, and protons are taken out by reacting the methanol and water by means of a catalyst in the vicinity of a membrane. Furthermore, with regard to a fuel cell in which a fuel is directly fed to a cell in the same way as in a DMFC, those employing a liquid fuel other than methanol, such as formic acid, isopropyl alcohol, or ethyl alcohol (hereinafter, called a 'direct liquid fuel type fuel cell') are being investigated. In all cases, the basic constitution of the fuel cell is the same, and there is the common problem that these fuels permeate the electrolyte membrane, the so-called crossover problem.

These fuel cells conventionally employ an electrolyte membrane formed from a polyperfluoroalkylsulfonic acid. However, a polyperfluoroalkylsulfonic acid membrane has the problem that when it is used in a fuel cell in which a fuel is supplied directly to the cell, such as a direct liquid fuel type fuel cell, the methanol, etc. fuel passes through the membrane, thus causing energy loss. Furthermore, since the overvoltage of a cathode increases due to fuel that has permeated, the open circuit voltage or the voltage on the low load side decreases. Moreover, since the membrane is swollen by the methanol etc. fuel, and its area changes greatly, problems such as a joint between an electrode and the membrane peeling apart easily occur, and there is also the problem that the fuel concentration cannot be increased. Moreover, there are the economic problems that the material itself is expensive due to it containing fluorine atoms, and since the production process is complicated and the productivity is low the cost is very high.

Because of this, there has been a desire for a polymer electrolyte membrane formed from an inexpensive hydrocarbon skeleton, for which permeability to fuel is suppressed when used as a direct liquid fuel type fuel cell. Electrolyte membranes for fuel cells disclosed in JP-A-2002-83612 (Patent Publication 1, JP-A denotes a Japanese unexamined patent application publication) and JP-A-2005-71609 (Patent Publication 2) are formed by filling a porous substrate with a polymer that is conductive for ions such as protons as a functional polymer; since the porous substrate is formed from a material that is resistant to deformation by an external force, such as polyimide or crosslinked polyethylene, excessive swelling of the functional polymer with which the pores are filled by an aqueous solution of fuel can be prevented, and as a result permeability to fuel can be suppressed.

With regard to a method for producing a functional membrane involving filling pores of such a porous substrate with a functional polymer, the present inventors have proposed a method in which a surfactant is directly added to a solution of the functional polymer or a solution of a precursor thereof (JP-A-2004-171994; Patent Publication 3). Filling with this polymer may be carried out by filling with prepolymerized functional polymer, but it may also be carried out by impregnating a porous substrate with a functional group-containing monomer forming the polymer, a monomer that can be converted into a functional group after polymerization, a monomer having a site into which a functional group can be introduced before or after polymerization, or a solution or a dispersion containing same (hereinafter, called a 'functional polymer precursor'), and carrying out polymerization.

Furthermore, the present inventors have proposed a method for continuously producing such a functional membrane having a structure in which the interior of pores of a porous substrate is filled with a functional polymer (WO 05/023921; Patent Publication 4). Here, as in Patent Publication 3, by use of a method in which a surfactant is directly added to a solution of a functional polymer or a solution of a precursor thereof, even if the solvent of the solution of a functional polymer or the solution of a precursor thereof is water and the porous substrate is a polyolefin having a hydrophobic surface, the interior of pores of the porous substrate can easily be impregnated with the solution of a functional polymer or the solution of a precursor thereof, and continuous production becomes possible. However, there is the problem that the impregnation time is long relative to the amount of surfactant used, and in order to carry out impregnation continuously by mechanically feeding out a roll-form porous substrate it is necessary to use a very long impregnation vessel or employ a very low transport rate for the porous substrate, thus making the productivity poor. Furthermore, as means for increasing the impregnation rate, increasing the amount of surfactant added has been considered, but in this case there is the problem that a large amount of surfactant remains as an impurity in the membrane thus obtained. That is, it is necessary to form a hydrophilic portion and a water-repellent portion in the interior of a fuel cell, but if there is a large amount of surfactant remaining, surfactant leaching from the membrane in the interior of the cell moves to another component such as an electrode, and the performance of a site, etc. where water-repellency is particularly required might be degraded.

When the present inventors carried out a detailed investigation into a process for producing such a functional membrane formed by filling a porous substrate with a functional polymer, it was found that by depositing a solution of a surfactant on the interior of pores of the porous substrate immediately before impregnating it with a solution of the functional polymer or a solution of a precursor thereof, the step of impregnating with the solution of the functional polymer or the solution of a precursor thereof is completed in a short time, a series of steps can be carried out continuously, and the productivity improves. However, there is the problem with this method that the performance of a membrane obtained in the initial stage of production of a continuously produced functional membrane and the performance of a membrane obtained in the final stage of production are different from each other, and the closer to the final stage the more the performance degrades. Because of this, it is necessary to guarantee the quality at a reduced performance or dispose of the product from the point at which the performance falls below a reference level, and production has to be carried out while lowering the guaranteed quality level or greatly reducing the productivity. When the cause thereof was investigated, it was found that this is because the solvent of the solution of the surfactant is carried into the solution of the polymer or the solution of a precursor thereof, the solution of the functional polymer or the solution of the precursor thereof is gradually diluted, and the amount of functional polymer with which the interior of the pores is filled decreases. In order to solve this, it is necessary to frequently replace the solution of the functional polymer or the solution of the precursor thereof, or increase the dimensions of a vessel in which the solution of the functional polymer or the solution of the precursor thereof is placed. However, both methods have the problem that much of the solution of the functional polymer or the solution of the precursor thereof is wasted.
Patent Publication 1: JP-A-2002-83612
Patent Publication 2: JP-A-2005-71609
Patent Publication 3: JP-A-2004-171994
Patent Publication 4: WO 05/023921

It is an object of the present invention to provide a method for producing a functional membrane having a structure in which pores of a porous substrate are filled with a functional polymer, such as the above-mentioned electrolyte membrane for a fuel cell, the method having improved productivity and improved stability of performance.

As a result of an investigation by the present inventors into improvement in productivity and stable production of a functional membrane formed by filling pores of a porous substrate with a functional polymer, it has been found that the productivity can be improved and stable production can be carried out by filling pores of a porous substrate with a solution of a functional polymer or a solution of a precursor thereof after carrying out steps of treating the porous substrate with a suspension of a surfactant and carrying out drying, and thus the present invention has been accomplished.

The above-mentioned object has been attained by means <1> below, which is described together with preferred embodiments <2> to <8>.
<1> A method for producing a functional membrane formed by filling pores of a porous substrate with a functional polymer, the method comprising at least steps (1) to (3) below,
   (1) a step of depositing a surfactant on the surface of the pores of the porous substrate by impregnating the porous substrate with a suspension of the surfactant,
   (2) a step of drying the porous substrate having the surfactant deposited thereon, and
   (3) a step of impregnating the dried porous substrate with a functional polymer or a precursor thereof, or a solution thereof,
<2> the method for producing a functional membrane according to <1> above, wherein steps (1) to (3) are a continuous series of steps,
<3> the method for producing a functional membrane according to <1> or <2> above, wherein the suspension of a surfactant employs a liquid comprising at least 50 weight % of water,
<4> the method for producing a functional membrane according to any one of <1> to <3> above, wherein the solution of a functional polymer or a precursor thereof employs a solvent comprising at least 50 weight % of water,
<5> the method for producing a functional membrane according to any one of <1> to <4> above, wherein the suspension of a surfactant has a surfactant concentration of 0.001 to 5 weight %,
<6> the method for producing a functional membrane according to any one of <1> to <5> above, wherein the functional polymer or the precursor thereof is a mixture of a monomer having both a polymerizable functional group and a protonic acid group in one molecule and a crosslinking agent having at least two polymerizable functional groups, or a polymer thereof,
<7> the method for producing a functional membrane according to any one of <1> to <6> above, wherein the suspension of a surfactant is prepared by suspending the surfactant while applying ultrasonic vibration to a liquid, and
<8> the method for producing a functional membrane according to any one of <1> to <7> above, wherein in step (1), the porous substrate is impregnated with the suspension of a surfactant while applying ultrasonic vibration to the suspension.

In accordance with the present invention, in the production of a functional membrane in which a porous substrate is filled with a functional polymer, the productivity increases, and the stability of the quality of the functional membrane obtained is remarkably improved.

### Brief Description of Drawings

FIG. 1. A schematic drawing showing a general surfactant molecule model.
FIG. 2. A schematic drawing showing the relationship between a surfactant and the surface of the interior of a pore or the outermost layer of a porous substrate when the porous substrate is contacted with a liquid of the surfactant in a suspended state in each Example.
FIG. 3. A schematic drawing showing the surface of the interior of a pore or the outermost layer of a porous substrate after the porous substrate is treated with a liquid of the surfactant in a suspended state in each Example.
FIG. 4. A schematic drawing showing the surface of the interior of a pore or the outermost layer of a porous substrate and a solution of a surfactant when the porous substrate is contacted with the solution in which the surfactant is completely dissolved in Comparative Examples 3 and 4.
FIG. 5. A schematic drawing showing the surface of the interior of a pore or the outermost layer of a porous substrate after the porous substrate is treated with a solution in which the surfactant is completely dissolved in Comparative Examples 3 and 4.
FIG. 6. A schematic drawing showing an outline of equipment, used in each Example and Comparative Example, for producing a functional membrane via steps of filling pores of a porous substrate with a solution of a polymer precursor by passing it through a surfactant vessel, a drying oven, and a polymer precursor solution impregnation vessel, polymerizing the polymer precursor, etc.

### Explanation of Reference Numerals and Symbols

- 1: Hydrophobic portion of surfactant molecule
- 2: Hydrophilic portion of surfactant molecule
- 3: Part of porous substrate
- 4: Micelle-form surfactant
- 5: Suspension of surfactant
- 6: Solution in which surfactant is uniformly dissolved
- 7: Porous substrate roll
- 8: Surfactant vessel
- 9: Drying oven
- 10: Functional polymer precursor solution vessel
- 11: Cover film roll
- 12: Cover film wind-up roll
- 13: UV lamp
- 14: Surface scraping brush
- 15: Water vessel
- 16: Drying oven
- 17: Functional membrane wind-up roll
- 18: Surfactant adsorption section
- 19: Surfactant suspension solvent removal section
- 20: Functional polymer precursor solution impregnation section
- 21: UV polymerization section
- 22: Surface scraping section
- 23: Drying section
- 24: Laminate roll

The present invention is explained in detail below.

The present invention relates to a method for producing a functional membrane by filling pores of a porous substrate with a functional polymer, the method involving treating the porous substrate with a surfactant suspension and, after a drying step, impregnating with a functional polymer or a precursor thereof, or a solution thereof.

That is, the method for producing a functional membrane of the present invention is a method for producing a functional membrane by filling pores of a porous substrate with a functional polymer, the method comprising steps (1) to (3) below.
(1) A step of depositing a surfactant on the surface of the pores of the porous substrate by impregnating the porous substrate with a suspension of the surfactant.
(2) A step of drying the porous substrate having the surfactant deposited thereon.
(3) A step of impregnating the dried porous substrate with a functional polymer or a precursor thereof, or a solution thereof.

The porous substrate used in such a functional membrane is not particularly limited, and may be obtained by, for example, a method involving drawing, a method in which a film is formed by applying by means of a coater, etc. a solution or a melt of a membrane material in which a pore-forming material has been dispersed and evaporating off the solvent or cooling the molten material, etc, and then removing the pore-forming material to make pores, etc.

Among them, the most general method is the method involving drawing. In this method, a material forming a porous substrate and a liquid or solid pore-forming material are mixed by a method such as melt-mixing so as to finely disperse the pore-forming material in advance, this mixture is drawn while extruding from a T die (also called a 'flat die'), etc., and the pore-forming material is removed by a method such as washing to give the porous substrate. Furthermore, examples of the drawing method include methods such as uniaxial drawing and biaxial drawing. In general, the shape, etc. of pores formed in the membrane are determined by the draw ratio, the type and amount of pore-forming agent added, the molecular weight of a resin forming the porous substrate, etc. When the porous substrate is applied to an electrolyte membrane for a fuel cell, a preferred production method therefor is one involving biaxial drawing. A method involving uniaxial drawing gives a substrate that is easily torn, and if a strong force is applied thereto when bonded to an electrode or incorporated into a fuel cell, a defect is easily caused.

When the functional membrane is an electrolyte membrane for a fuel cell, the porous substrate used in the present invention is preferably a material for which there is substantially no swelling in methanol or water and, in particular, it is desirable that the change in area when wetted with water compared with when it is dry is small or almost none. The increase in area when the porous substrate is immersed in methanol or water changes depending on the immersion time and temperature, and in the present invention the increase in area when immersed in pure water at 25°C for 1 hour is preferably no greater than 20% compared with when it is dry.

Materials having such properties are not particularly limited, and examples thereof include engineering plastics such as aromatic polyimide, aramid, polysulfone, and polyether ether ketone; polyolefins such as polyethylene, polypropylene, and polymethylpentene; polytetrafluoroethylene, and polyvinylidene fluoride. These materials may be used singly or as a composite of two or more types by a lamination, etc. method.

Among these porous substrates, polyethylene, polypropylene, etc. are preferable since they are easily available, have excellent strength and flexibility, and therefore have good workability in a filling step.

The porosity of the porous substrate obtained as above is preferably 10% to 90%, and when the application of the functional membrane is in a fuel cell, it is more preferably 20% to 60%. When the porosity is at least 10%, there are a sufficient number of ion exchange groups per unit area and a fuel cell having a high output can be obtained, and when the porosity is no greater than 90%, the amount of fuel permeating is appropriate, and the membrane strength is excellent. The average pore size is preferably no greater than 0.1 µm, and more preferably in the range of 0.001 to 0.1 µm. The smaller the pore size, the easier it is to retain an electrolyte and it is preferable in terms of durability, but when the pore size is too small, filling with an electrolyte becomes difficult. When the average pore size is no greater than 0.1 µm, the electrolyte can be retained sufficiently, hardly any electrolyte comes out of the pores due to swelling of the electrolyte, and since the electrolyte membrane has sufficient strength against a force caused by swelling of the electrolyte, there is hardly any deformation thereof. The thickness of the substrate is preferably in the range of 10 to 50 µm, and more preferably 10 to 40 µm. When the membrane thickness is at least 10 µm, the membrane strength is excellent and the amount of methanol permeating is appropriate, and when the membrane thickness is no greater than 50 µm, the membrane resistance has an appropriate value and when used in a fuel cell a high output can be obtained.

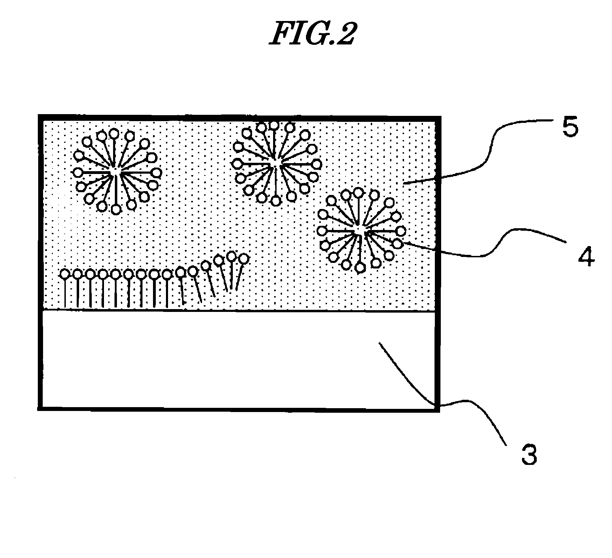

In the step of depositing a surfactant on the surface of pores of the porous substrate in the present invention, a suspension of a surfactant, that is, one in which a surfactant is in a suspended state in a liquid, is used. The suspended state means a state in which, as shown in FIG. 2, large numbers of surfactant molecules themselves form so-called micelles and are dispersed in a liquid. Since the micelles scatter light a liquid in such a suspended state appears cloudy to the eye and can therefore be distinguished, but confirmation or control, etc. of concentration may be carried out by an optical method such as light transmittance.

According to an experiment by the present inventors, it has been found that, even when the same type and the same amount of surfactant is used, depending on the liquid selected, the surfactant might be completely dissolved, but even if the porous substrate is treated with such a liquid a sufficient effect cannot be obtained in terms of improvement in productivity.

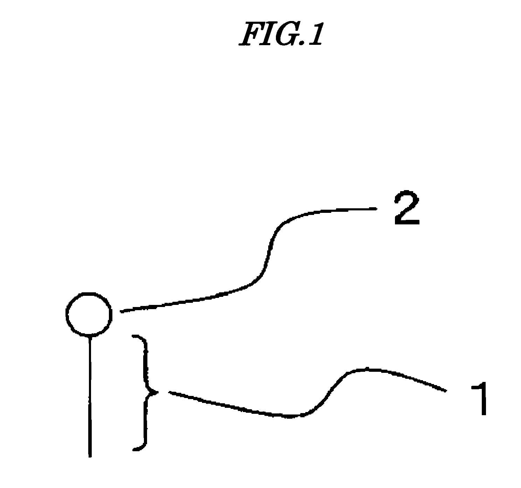

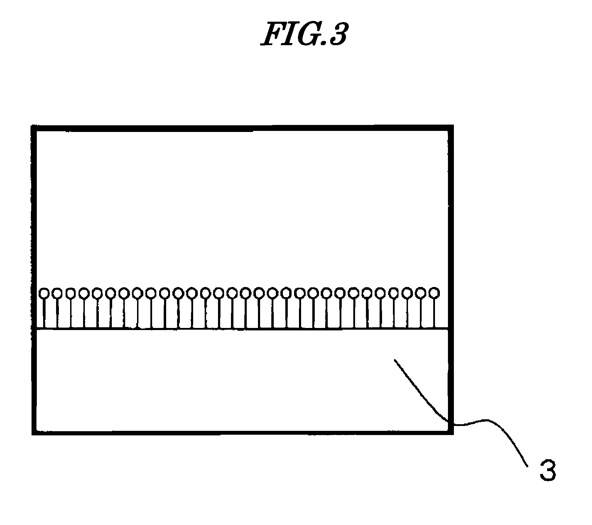

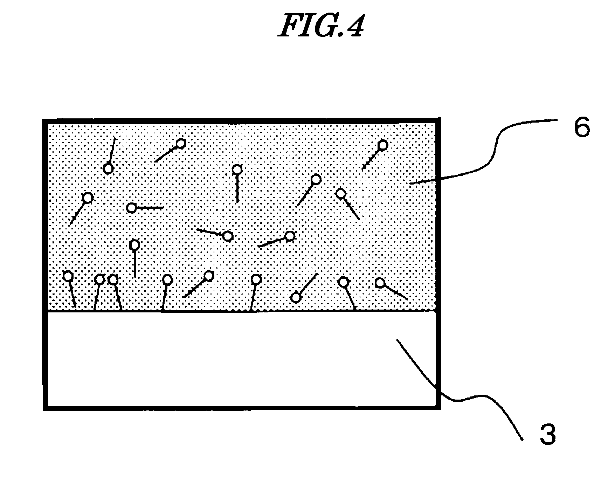

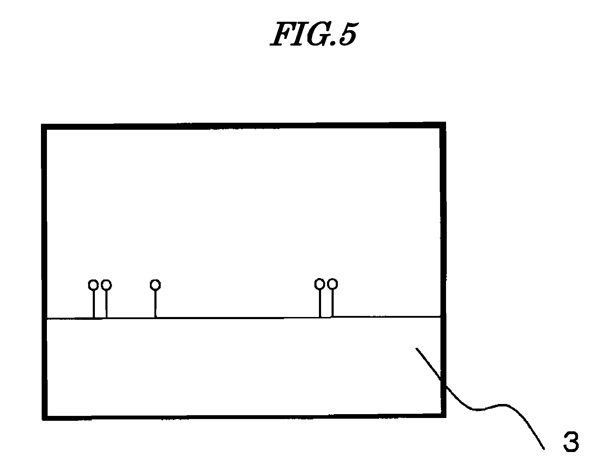

Although the cause of such a difference is uncertain, it is surmised that, if a representative structure for the surfactant is explained as shown in FIG. 1, when as shown in FIG. 2 the surfactant forms micelles and is suspended in an aqueous solution, the micelles adsorb on a porous substrate whose surface is hydrophobic, and when as shown in FIG. 3 the micelle state is broken, the surfactant is deposited on the substrate with the hydrophobic portion of the surfactant facing toward the surface of the substrate. In a liquid in which micelles are dispersed, since it is difficult to dissolve micelles deposited on the substrate surface, it can be expected that once the surfactant has been uniformly deposited on the substrate surface it will then be difficult to redissolve. On the other hand, when as shown in FIG. 4 the surfactant completely dissolves and does not form micelles, the liquid can dissolve the surfactant, and since the hydrophobic portion of the surfactant has good affinity for both the substrate surface and the solvent, depositing the hydrophobic portion on the substrate surface becomes difficult. Furthermore, it can be expected that even if it is deposited on the substrate surface it will be rapidly washed away by the solvent, and as shown in FIG. 5 the amount thereof deposited is small and nonuniform.

In the present invention, the liquid for dispersing the surfactant is preferably aqueous, and is more preferably a mixed liquid containing at least 50 weight % of water. This is because surfactant dispersed in an aqueous liquid forms micelles in which individual molecules aggregate with their hydrophobic portions facing inward and, as described above, after the surfactant is deposited on the porous substrate surface, it is difficult to redissolve it.

When a suspension of the surfactant is formed, it is preferable to employ a method in which the surfactant is suspended while applying ultrasonic vibration to the liquid and, furthermore, combining this with stirring. Depending on the type, etc. of surfactant, if suspending is insufficient, the surfactant might float in the form of oil droplets. The suspension of a surfactant used in the present invention is preferably used in a state in which no oil droplets are floating on the surface. When it is used in a state in which no oil droplets are floating, no oil droplets are deposited on the porous substrate, the ease of impregnation with the functional polymer is excellent, and the functional membrane obtained has hardly any areas where there is a problem with appearance or poor performance. It is preferable to carry out suspension while applying ultrasonic vibration since the suspended state is stabilized for a long time and a surfactant suspension having a high concentration can be formed without generating oil droplets.

In the step (1) of impregnating a porous substrate with a surfactant suspension, it is preferable to carry it out while applying ultrasonic vibration to the suspension. It is preferable to apply ultrasonic vibration since the replacement of air within the pores of the porous substrate with the suspension is promoted, and the time taken for the impregnation step can be greatly reduced.

The ultrasonic vibration frequency is not particularly limited, but it is preferably in the range of 20 kHz to 50 kHz. As means for applying ultrasonic vibration, a probe emitting ultrasound may be immersed directly in the liquid, or an ultrasonic vibrator may be installed outside a vessel as in an ultrasonic cleaning vessel. In the present invention, the surfactant-treated porous substrate that has undergone steps (1) and (2) is impregnated with a functional polymer or a precursor thereof, or a solution thereof in a very short time in step (3). However, since the step of impregnating the porous substrate with the surfactant suspension takes a relatively long time, when the two steps are incorporated into one line and a functional membrane is produced continuously the line speed can be increased by carrying out step (1) in a short time. Because of this, when ultrasound is used in step (1), the line speed can be greatly increased, and the productivity is further improved.

In the present invention, the liquid for dispersing the surfactant is preferably aqueous, and in order to make dispersion easy it may contain a water-soluble organic solvent as an adjusting agent. In this case, the water-soluble organic solvent is not particularly limited as long as a mixed liquid with water does not completely dissolve the surfactant, and preferred examples thereof include alcohols such as methanol, ethanol, *n*-propanol, isopropanol, and butanol; amides such as dimethylformamide, dimethylacetamide, and *N*-methyl-2-pyrrolidone; ketones such as acetone and methyl ethyl ketone; and dimethylsulfoxide. Among them, an alcohol is preferable. It is more preferable to use an alcohol having a relatively low boiling point selected from methanol, ethanol, *n*-propanol, and isopropanol. The reason why such an alcohol is preferable is because the proportion mixed with water can be freely selected, and when the surfactant treatment is carried out continuously, it can easily be removed even at a high line speed.

The surfactant that can be used in the present invention is not particularly limited, but examples thereof are as follows.

Examples of anionic surfactants include fatty acid salts such as a mixed fatty acid sodium soap, a partially hardened tallow fatty acid sodium soap, a sodium stearate soap, a potassium oleate soap, and a castor oil potassium soap; alkyl sulfate esters such as sodium laurylsulfate, a sodium higher alcohol sulfate, and triethanolamine laurylsulfate; alkylbenzenesulfonic acid salts such as sodium dodecylbenzenesulfonate; alkylnaphthalenesulfonic acid salts such as a sodium alkylnaphthalenesulfonate; alkylsulfosuccinic acid salts such as a sodium dialkylsulfosuccinate; alkyl diphenyl ether disulfonic acid salts such as a sodium alkyl diphenyl ether disulfonate; alkylphosphoric acid salts such as a potassium alkylphosphate; polyoxyethylene alkyl (or alkylaryl) sulfate esters such as sodium polyoxyethylene lauryl ether sulfate, a sodium polyoxyethylene alkyl ether sulfate, a triethanolamine polyoxyethylene alkyl ether sulfate, and a sodium polyoxyethylene alkylphenyl ether sulfate; naphthalenesulfonic acid formalin condensates such as a sodium β-naphthalenesulfonate formalin condensate; and polyoxyethylene alkylphosphate esters.

Examples of nonionic surfactants include polyoxyethylene alkyl ethers such as polyoxyethylene lauryl ether, polyoxyethylene cetyl ether, polyoxyethylene stearyl ether, polyoxyethylene oleyl ether, and a polyoxyethylene higher alcohol ether; polyoxyethylene alkylaryl ethers such as polyoxyethylene nonylphenyl ether; sorbitan fatty acid esters such as sorbitan monolaurate, sorbitan monopalmitate, sorbitan monostearate, sorbitan tristearate, sorbitan monooleate, sorbitan trioleate, sorbitan sesquioleate, and sorbitan distearate; polyoxyethylene sorbitan fatty acid esters such as polyoxyethylene sorbitan monolaurate, polyoxyethylene sorbitan monopalmitate, polyoxyethylene sorbitan monostearate, polyoxyethylene sorbitan tristearate, polyoxyethylene sorbitan monooleate, and polyoxyethylene sorbitan trioleate; polyoxyethylene sorbitol fatty acid esters such as polyoxyethylene sorbitol tetraoleate; glycerol fatty acid esters such as glycerol monostearate, glycerol monooleate, and self-emulsifying glycerol monostearate; polyoxyethylene fatty acid esters such as polyethylene glycol monolaurate, polyethylene glycol monostearate, polyethylene glycol distearate, and polyethylene glycol monooleate; polyoxyethylene alkylamines; polyoxyethylene hardened castor oil; and alkylalkanolamides.

Examples of cationic surfactants and amphoteric surfactants include alkylamine salts such as coconut amine acetate and stearylamine acetate; quaternary ammonium salts such as lauryltrimethylammonium chloride, stearyltrimethylammonium chloride, cetyltrimethylammonium chloride, distearyldimethylammonium chloride, and an alkylbenzyldimethylammonium chloride; alkylbetaines such as laurylbetaine, stearylbetaine, and laurylcarboxymethylhydroxyethylimidazolium betaine; and amine oxides such as lauryldimethylamine oxide.

As surfactants, there are fluorine-based surfactants. Since a small amount of a fluorine-based surfactant can improve the wettability with a monomer aqueous solution, there is little influence as an impurity, which is preferable. Various types of fluorine-based surfactants may be used in the present invention; for example, there is one formed by replacing hydrogen of a hydrophobic group of a general surfactant with fluorine so as to make a fluorocarbon skeleton such as a perfluoroalkyl group or a perfluoroalkenyl group, and the surface activity is markedly high. By changing a hydrophilic group of a fluorine-based surfactant, four types, that is, anionic type, nonionic type, cationic type, and amphoteric type are obtained. Representative examples of the fluorine-based surfactant are as follows.

A fluoroalkyl (number of carbons 2 to 10 (C2 to C10)) carboxylic acid, disodium *N*-perfluorooctanesulfonylglutamate, a sodium 3-[fluoroalkyl (C6 to C11) oxy]-1-alkyl (C3 to C4) sulfonate, a sodium 3-[ω-fluoroalkanoyl (C6 to C8)-*N*-ethylamino]-1-propanesulfonate, N-[3-(perfluorooctanesulfonamido)propyl]-*N*,*N*-dimethyl-*N*-carboxymethyleneammoniu m betaine, a fluoroalkyl (C11 to C20) carboxylic acid, a perfluoroalkylcarboxylic acid (C7 to C13), perfluorooctanesulfonic acid diethanolamide, a perfluoroalkyl (C4 to C12) sulfonic acid salt (Li, K, Na), N-propyl-*N*-(2-hydroxyethyl)perfluorooctanesulfonamide, a perfluoroalkyl (C6 to C10) alfonamidopropyltrimethylammonium salt, a perfluoroalkyl (C6 to C10)-*N*-ethylsulfonylglycine salt (K), bis(*N*-perfluorooctylsulfony)-*N*-ethylaminoethyl) phosphate, a monoperfluoroalkyl (C6 to C16) ethylphosphate ester, a perfluoroalkenyl quaternary ammonium salt, a perfluoroalkenylpolyoxyethylene ether, and a sodium perfluoroalkenylsulfonate.

As surfactants, there are also silicone-based surfactants. Use of a small amount of a silicone-based surfactant can improve the wettability with a monomer aqueous solution. Various types of silicone-based surfactants can be used in the present invention, and examples include one in which a silicone is hydrophilically modified with polyethylene oxide, polypropylene oxide, etc.

As surfactants, there are also acetylene glycol-based surfactants. Since acetylene glycol-based surfactants have antifoaming properties, there is hardly any foaming of a surfactant treatment liquid, there are few processing defects due to the deposition of bubbles, and they can preferably be used for the purpose of the present invention. As such compounds, ones in which a polyethylene oxide structure is bonded to an acetylene glycol skeleton are commercially available, and examples thereof include Surfynol and Dynol (product names) manufactured by Nisshin Chemical Industry Co., Ltd.

The amount of such surfactant used depends on the type of functional polymer or precursor thereof, or solution thereof used for impregnation after treatment with the surfactant, and the properties of a porous membrane used, but it is preferably 0.001 to 5 weight % relative to the total amount of the surfactant suspension, more preferably 0.01 to 5 weight %, and particularly preferably 0.1 to 1 weight %. When the amount of surfactant used is at least 0.001 weight %, it is easy to fill a porous substrate with a functional polymer precursor, and when the amount of surfactant used is no greater than 5 weight %, this is an amount that gives a sufficient effect, is economical and, furthermore, does not block the pores of the porous substrate with the surfactant itself by the surfactant becoming oil droplets instead of micelles, which occurs for some types, thus giving a functional membrane with excellent performance.

Deposition of a surfactant on the surface of pores of a porous substrate can be ascertained by dropping a water droplet and observing that the water soaks in instead of being repelled.

In the production method of the present invention, a porous substrate having a surfactant deposited thereon is dried. A drying method is not particularly limited, but it is preferable to employ hot air drying since the interior of the pores can be dried in a short period of time. The temperature conditions in this case depend on the material of the porous substrate; for example, in the case of it being formed from polyethylene, the temperature is preferably no greater than 100°C, and more preferably 50°C to 90°C. The drying time, the quantity of hot air supplied, etc. may be determined as appropriate by a preliminary test, etc.

The functional membrane obtained by the production method of the present invention is formed by filling the interior of the pores of a porous substrate with a functional polymer having an ion exchange group, etc. This filling with a polymer may be carried out by filling with a prepolymerized polymer. However, in a case in which the functional polymer is formed from a radically polymerizable monomer, since this monomer can be polymerized at a relatively low temperature by appropriately selecting a polymerization initiator, it is preferable to employ a method in which a porous substrate is impregnated with a functional polymer precursor and then polymerized. In this case, the functional polymer precursor used for filling may comprise as necessary a polymerization initiator, a catalyst, a curing agent, etc.

When the functional membrane in the present invention is an electrolyte membrane for a fuel cell, the functional polymer with which the porous substrate is filled is a polymer functioning as an electrolyte, and this polymer is preferably formed by polymerizing a functional polymer precursor comprising a radically polymerizable protonic acid group-containing monomer as a main component since performance as an electrolyte membrane for a fuel cell is good. This monomer is a compound having both a polymerizable functional group and a protonic acid group in one molecule. Specific examples thereof include 2-(meth)acrylamido-2-methylpropanesulfonic acid, 2-(meth)acrylamido-2-methylpropanephosphonic acid, styrenesulfonic acid, (meth)allylsulfonic acid, vinylsulfonic acid, isoprenesulfonic acid, (meth)acrylic acid, maleic acid, crotonic acid, vinylphosphonic acid, and an acidic phosphoric acid group-containing (meth)acrylate.

'(Meth)acrylic' denotes 'acrylic and/or methacrylic', '(meth)allyl' denotes 'allyl and/or methallyl', and '(meth)acrylate' denotes 'acrylate and/or methacrylate'.

Furthermore, a monomer having a functional group that can be converted into an ion-exchange group after polymerization is a salt, anhydride, ester, etc. of the above-mentioned compounds. When an acid residue of the monomer used is in the form of a derivative such as a salt, anhydride, or ester, by converting it into a protonic acid form after polymerization, proton conductivity may be imparted.

Moreover, as a monomer having a site into which an ion-exchange group can be introduced before or after polymerization, a benzene ring-containing monomer such as styrene, α-methylstyrene, chloromethylstyrene, or *t*-butylstyrene may preferably be used. Examples of a method for introducing an ion-exchange group into the above monomers include a method involving sulfonation using a sulfonating agent such as chlorosulfonic acid, conc. sulfuric acid, or sulfur trioxide.

Among the above-mentioned compounds, a sulfonic acid group-containing vinyl compound or a phosphoric acid group-containing vinyl compound is preferable because of excellent proton conductivity, and 2-(meth)acrylamido-2-methylpropanesulfonic acid is more preferable due to high polymerizablility.

A polyperfluoroalkylsulfonic acid may be used as the functional polymer, and a monomer that is a precursor to a polyperfluoroalkylsulfonic acid may also be used by polymerizing it in the pores of a porous substrate.

When the functional membrane used in the present invention is an electrolyte membrane for a fuel cell, a mixture of an ion-exchange group-containing monomer and a crosslinking agent is preferable as a precursor of the functional polymer. A compound that can be used as a crosslinking agent has at least two polymerizable functional groups in one molecule, and by carrying out polymerization by mixing it with the above-mentioned compound having both a polymerizable functional group and a protonic acid group in one molecule or a salt thereof, etc. crosslinked sites are formed in the polymer, thus giving a polymer having a three-dimensional network structure, which does not dissolve or melt.

Specific examples thereof include *N*,*N*'-methylenebis(meth)acrylamide, *N*,*N*'-ethylenebis(meth)acrylamide, *N*,*N*'-propylenebis(meth)acrylamide, *N*,*N*'-butylenebis(meth)acrylamide, polyethylene glycol di(meth)acrylate, polypropylene glycol di(meth)acrylate, trimethylolpropane diallyl ether, pentaerythritol triallyl ether, divinylbenzene, bisphenol di(meth)acrylate, isocyanuric acid di(meth)acrylate, tetraallyloxyethane, and triallylamine. It is also possible to use a compound that has in one molecule both a polymerizable double bond and another functional group that can undergo a crosslinking reaction. Examples of such a compound include *N*-methylolacrylamide, *N*-methoxymethylacrylamide, and *N*-butoxymethylacrylamide, and it may be crosslinked by a condensation reaction, etc. by heating after carrying out radical polymerization of the polymerizable double bond, or a crosslinking reaction may be carried out in the same manner by heating at the same time as radical polymerization.

Furthermore, the crosslinking functional group is not limited to those having a carbon-carbon double bond, and a di- or higher-functional epoxy compound, a phenyl group having a hydroxymethyl group, etc. may be used, although they are inferior since the polymerization reaction rate is low. When an epoxy compound is used, crosslinking may be carried out by a reaction with an acid such as a carboxyl group in the polymer, or a copolymerizable compound having a hydroxyl group, etc. may be added as a third component to the polymer precursor. These crosslinking agents may be used singly or in a combination of two or more types as necessary.

A third copolymerization component having no protonic acid group may be added to the functional polymer precursor used in the present invention as necessary in order to adjust the swelling properties, etc. of the polymer. The third component is not particularly limited as long as it can copolymerize with the ion-exchange group-containing monomer and the crosslinking agent used in the present invention, and examples thereof include (meth)acrylic acid esters, (meth)acrylamides, maleimides, styrenes, vinyl organic acids, allyl compounds, and methallyl compounds.

In the present invention, a method for polymerizing the monomer in the functional polymer precursor within the pores of the porous substrate is not particularly limited, but in the case of radical polymerization, irradiation with actinic radiation such as an electron beam or ultraviolet rays, heating, etc. are preferably used as easy methods.

Examples of radical polymerization initiators for thermally initiated polymerization or redox initiated polymerization that can be used in the above are as follows.

Azo compounds such as 2,2'-azobis(2-amidinopropane) dihydrochloride; peroxides such as ammonium persulfate, potassium persulfate, sodium persulfate, hydrogen peroxide, benzoyl peroxide, cumene hydroperoxide, and di-*t*-butylperoxide; a redox initiating agent formed by combination of the above-mentioned peroxide and a reducing agent such as a sulfite, a bisulfite, a thiosulfate, formamidinesulfinic acid, or ascorbic acid; and azo radical polymerization initiators such as 2,2'-azobis-(2-amidinopropane) dihydrochloride and azobiscyanovaleric acid. These radical polymerization initiators may be used singly or in a combination of two or more types.

Among the above-mentioned polymerization means, polymerization that is photoinitiated by ultraviolet rays is desirable since the polymerization reaction is easy to control and a desired electrolyte membrane is obtained with good productivity by a relatively simple process. Furthermore, when photoinitiated polymerization is carried out, it is more preferable to dissolve or disperse a radical photopolymerization initiator in an electrolyte precursor.

Examples of the radical photopolymerization initiator include benzoin, benzil, acetophenone, benzophenone, thioxanthone, thioacridone, and derivatives thereof, which are generally used in ultraviolet polymerization, and specific examples thereof include benzophenone types such as methyl o-benzoylbenzoate, 4-phenylbenzophenone, 4-benzoyl-4'-methyldiphenylsulfide, 3,3',4,4'-tetra(*t*-butylperoxycarbonyl)benzophenone, 2,4,6-trimethylbenzophenone, 4-benzoyl-*N*,*N*-dimethyl-*N*-[2-(1-oxy-2-propenyloxy)ethyl]benzenemethanaminium bromide, (4-benzoylbenzyl)trimethylammonium chloride, 4,4'-dimethylaminobenzophenone, and 4,4'-diethylaminobenzophenone; thioxanthone types such as thioxanthone, 2-chlorothioxanthone, 2,4-diethylthioxanthone, and 2-ethylthioxanthone; thioacridone types such as thioacridone; benzoin types such as benzoin, benzoin methyl ether, benzoin isopropyl ether, benzoin ethyl ether, and benzoin isobutyl ether; acetophenone types such as acetophenone, propiophenone, diethoxyacetophenone, 2,2-dimethoxy-1,2-diphenylethan-1-one, 1-hydroxycyclohexyl phenyl ketone, 2-methyl-1-(4-methylthiophenyl)-2-morpholinopropan-1-one, 2-benzyl-2-dimethylamino-1-(4-morpholinophenyl)butan-1-one, 2-hydroxy-2-methyl-1-phenylpropan-1-one, and 1-[4-(2-hydroxyethoxy)phenyl]-2-hydroxy-2-methylpropan-1-one; and benzil compounds such as benzil.

The amount of photopolymerization initiator used is preferably 0.001 to 1 weight % relative to the total weight of the ion-exchange group-containing monomer and the third component, which is an unsaturated monomer, is more preferably 0.001 to 0.5 weight %, and is particularly preferably 0.01 to 0.5 weight %. Among them, an aromatic ketone radical polymerization initiator such as benzophenone, thioxanthone, or thioacridone is preferable since it can generate a radical by abstracting hydrogen from a carbon-hydrogen bond and, when used in combination with an organic material such as a polyolefin as a porous substrate, it can form a chemical bond between the surface of the substrate and the polymer used for filling.

In the present invention, when impregnating the porous substrate with the functional polymer precursor, the monomer, crosslinking agent, and as necessary polymerization initiator, etc. are mixed to give a liquid, and when this is a low viscosity liquid it may be used as it is, but it is preferable to make a solution or a dispersion, since it then becomes easy to carry out filling, and it is more preferable to make a solution having a concentration of 5 weight % or greater. In particular, it is more preferable to make a 10 to 90 weight % solution, and it is particularly preferable to make a 20 to 70 weight % solution.

In the present invention, when the porous substrate is impregnated with a solution of the functional polymer or the functional polymer precursor, the solvent is preferably water or a mixed liquid containing at least 50 weight % of water.

When a component that is sparingly soluble in water is used, some of the water may be replaced with an organic solvent, but when an organic solvent is used, since it is necessary to remove all the organic solvent before joining an electrode, it is preferable to use an aqueous solution. The reason why impregnation is carried out using a solution is because impregnation into a porous substrate having fine pores is facilitated by the use of a solution in water or water containing a solvent, and because forming a pre-swollen gel within a pore can exhibit an effect in preventing polymer within the pore from coming out due to the polymer being swollen too much by water or methanol when a functional membrane thus formed is made into a fuel cell.

Furthermore, when a functional polymer precursor is used, in order to enhance the durability of the functional membrane, it is preferable to improve adhesion between the porous substrate and the polymer used for filling, and because of this the porous substrate may be either irradiated with actinic radiation such as radioactive rays, an electron beam, or ultraviolet rays, or treated with plasma, ozone, or corona discharge, or a combination thereof. Furthermore, a radical polymerization initiator that abstracts hydrogen may simply be deposited on the surface. In this case, it is preferable to carry out deposition by contacting a solution of a radical generator in a solvent with the porous substrate and then removing the solvent since it then becomes uniformly deposited on the interior of the pores.

For the purpose of making the impregnation operation easy, it is preferable to carry out application of ultrasound during impregnation.

In order to prevent the solution of a functional polymer or the solution of a precursor thereof thus used for impregnation from coming out from the pores of the porous substrate and to obtain a uniform functional membrane after polymerization, it is preferable to sandwich the porous substrate between films, etc., and when the functional polymer precursor is radically polymerizable, this film is preferably one having an effect as a barrier toward oxygen in air, which inhibits radical polymerization.

In the present invention, it is preferable for (1) the step of depositing the surfactant on the surface of the pores of the porous substrate by impregnating the porous substrate with a suspension of the surfactant, (2) the step of drying the porous substrate having the surfactant deposited thereon, and (3) the step of impregnating the dried porous substrate with the functional polymer or a precursor thereof, or a solution thereof to be a continuous series of steps since the productivity is good, but when a functional polymer precursor is used, it is more preferable to include a polymerization step therefor, etc. in the continuous series of steps.

Furthermore, the method for producing a functional membrane of the present invention may as necessary comprise a step known in a conventional method for producing a functional membrane. For example, a step such as a step of washing or drying a functional membrane thus obtained, etc. may be included.

### Examples

### Reference Example

An electrolyte membrane was prepared as a functional membrane batchwise at laboratory scale without carrying out a pretreatment with surfactant, the physical properties thereof were measured, and they were defined as the standard physical properties of an electrolyte membrane obtained from a polymer precursor composition and a porous substrate used here. That is, when production is carried out continuously, if the physical properties of a beginning portion of the electrolyte membrane up to an end portion thereof are closer to the standard physical properties, this suggests that the electrolyte membrane is being produced without any problem, and if the physical properties differ greatly between the beginning portion and the end portion, or variations in numerical values are large, this suggests that the production stability is poor.

A method for preparing this standard electrolyte membrane is explained.

First, a porous substrate of the same type as that used in Examples and Comparative Examples with a size of 5 cm × 5 cm was immersed in a liquid in which a surfactant was added at 5 weight % to an electrolyte polymer precursor solution having the same composition as that used in the Examples and Comparative Examples, after it was filled sufficiently with the electrolyte polymer precursor solution, it was sandwiched between two sheets of PET film, and both sides were irradiated with UV rays through the PET film using a high pressure mercury lamp at 1000 mJ/cm² per side, thereby polymerizing the monomer in the electrolyte precursor. Subsequently, this PET film was peeled off, washing with distilled water was carried out, and an electrolyte membrane was obtained. The proton conductivity and methanol permeation flux of the electrolyte membrane thus obtained were measured, and the results are given in Table 1.

### Example 1

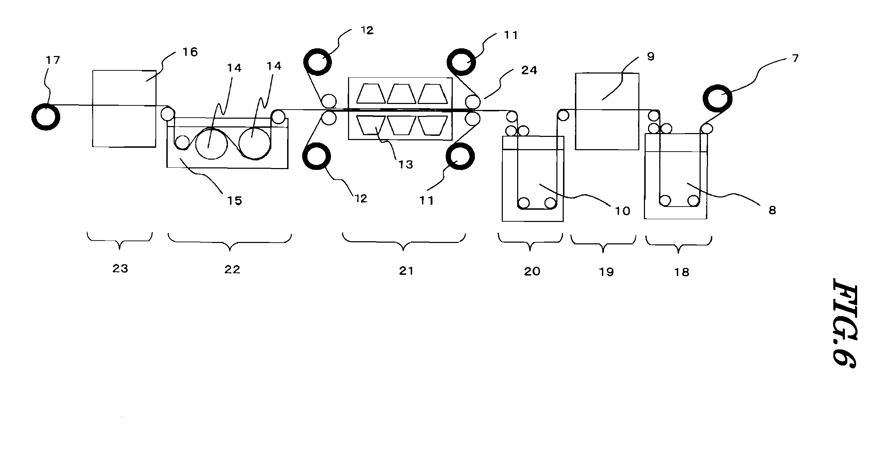

A section of a roll of a polyethylene membrane (thickness 30 µm, porosity 35%, average pore size about 0.06 µm) with a length of 50 m was prepared as a porous substrate. A vessel (surfactant vessel) was charged with a suspension having a composition of 0.5 weight % of a surfactant (acetylene glycol-based surfactant: product name Dynol 604, manufactured by Nisshin Chemical Industry Co., Ltd.), 79.5 weight % of water, and 20 weight % of isopropyl alcohol, the porous substrate was continuously immersed therein while unwinding it from the roll, and passed through a hot air drying oven at about 80°C. Subsequently, it was continuously immersed in an electrolyte polymer precursor solution having a composition comprising 35 g of 2-acrylamido-2-methylpropanesulfonic acid, 15 g of *N*,*N*'-ethylenebisacrylamide, 0.005 g of a UV radical polymerization initiator, and 50 g of water so as to impregnate it with the monomer aqueous solution, and impregnation of the porous substrate with the monomer aqueous solution was completed within 1 sec. Completion of the impregnation was confirmed visually by the entire porous substrate changing from opaque to transparent. It was further sandwiched from the top and the bottom with PET film, and both sides were irradiated with UV rays using a high pressure mercury lamp through the PET film at 1000 mJ/cm² per side, thus polymerizing the monomer in the electrolyte polymer precursor. Subsequently, this PET film was peeled off, washing with distilled water was carried out, and an electrolyte membrane was obtained. This series of steps was carried out continuously using the equipment shown in FIG. 6. The proton conductivity and methanol permeation flux of the electrolyte membrane thus obtained were measured, and the results are given in Table 1.

### Example 2

An electrolyte membrane was obtained in the same way as in Example 1 except that a solution of a surfactant having a composition comprising 0.4 weight % of Dynol 604 and 99.6 weight % of water was used. In this case also, the surfactant vessel was in a suspended state, and impregnation with the monomer aqueous solution was within 1 sec. This membrane was evaluated in the same manner as in Example 1, and the results are brought together in Table 1.

### Example 3

An electrolyte membrane was obtained in the same way as in Example 1 except that a solution of an electrolyte polymer precursor having a composition comprising 45 g of 2-acrylamido-2-methylpropanesulfonic acid, 5 g of *N*,*N*'-ethylenebisacrylamide, 0.005 g of a UV radical polymerization initiator, and 50 g of water was used. This membrane was evaluated in the same manner as in Example 1, and the results are brought together in Table 1.

### Example 4

An electrolyte membrane was obtained in the same way as in Example 1 except that a solution of a surfactant having a composition comprising 0.1 weight % of Dynol 604, 79.9 weight % of water, and 20 weight % of isopropyl alcohol was used. In this case, the surfactant vessel was in a slightly suspended state, and impregnation of the porous substrate with the polymer precursor solution took 7 minutes. This membrane was evaluated in the same manner as in Example 1, and the results are brought together in Table 1.

### Example 5

An electrolyte membrane was obtained in the same way as in Example 1 except that the surfactant was changed to sodium dodecylbenzenesulfonate. In this case also, the surfactant vessel was in a suspended state, and impregnation with the monomer aqueous solution was within 1 sec. This membrane was evaluated in the same manner as in Example 1, and the results are brought together in Table 1.

### Comparative Example 1

An electrolyte membrane was obtained in the same way as in Example 1 except that after passing it through the solution of surfactant it was not passed through the drying oven. In this case, there was no impregnation unevenness as far as could be visually ascertained and a 50 m long membrane having a good appearance was obtained. This membrane was evaluated in the same manner as in Example 1, and the results are brought together in Table 1.

### Comparative Example 2

An electrolyte membrane was obtained in the same way as in Example 3 except that after passing through the solution of surfactant it was not passed through the drying oven. In this case, there was no impregnation unevenness as far as could be visually ascertained and a 50 m long membrane having a good appearance was obtained. This membrane was evaluated in the same manner as in Example 1, and the results are brought together in Table 1.

### Comparative Example 3

An electrolyte membrane was obtained in the same way as in Example 1 except that a solution of a surfactant having a composition comprising 0.4 weight % of Dynol 604 and 99.6 weight % of isopropyl alcohol was used. In this surfactant vessel, the surfactant was not suspended but was completely dissolved. Since the membrane thus obtained had a mixture of transparent portions and opaque portions, it could be seen that there were a large number of places where impregnation with the electrolyte polymer was insufficient and a large number of portions that did not function as an electrolyte membrane.

### Comparative Example 4

An electrolyte membrane was obtained in the same way as in Example 1 except that a solution of a surfactant having a composition comprising 0.4 weight % of Dynol 604, 30 weight % of isopropyl alcohol, and 69.9 weight % of water was used. In the surfactant vessel in this case, the surfactant was dissolved. This membrane had a large number of places where impregnation with the electrolyte polymer was insufficient, and did not function as an electrolyte membrane.

### Example 6

An electrolyte membrane was obtained in the same way as in Example 1 except that a solution of a surfactant having a composition comprising 2 weight % of Dynol 604, 78 weight % of water, and 20 weight % of isopropyl alcohol was used. In this surfactant vessel, the surfactant was suspended, but oil droplets of the surfactant were floating on the surface. With regard to the membrane thus obtained, it was found that in portions on which oil droplets of the surfactant were deposited, impregnation with the electrolyte polymer was insufficient, and there were portions that did not function as an electrolyte membrane. The physical properties of portions that functioned as an electrolyte membrane were substantially the same as those of Example 1, and the physical properties did not change in the lengthwise direction.

### Example 7

When a surfactant suspension having the same composition as in Example 2 was placed in a 40 kHz output 240 W ultrasonic cleaning vessel, and the same porous substrate as in Example 2 was put thereinto while applying ultrasonic vibration, the porous substrate, which was opaque, became semitransparent in about 25 sec, and deposition of the surfactant on the surface of the pores of the porous substrate was completed.

In the case of Example 2, completion of the deposition took about 150 sec.

The physical properties as an electrolyte membrane were substantially the same as in Example 2, and the physical properties did not change in the lengthwise direction.

### Example 8

When surfactant suspensions having the same composition as that used in Example 2 were prepared, a liquid stirred for 2 hours using a magnetic stirrer and a liquid to which, after stirring for 30 minutes by means of a magnetic stirrer, ultrasonic vibration was applied while immersing a 20 kHz ultrasonic vibration probe for 5 minutes were each left to stand for 1 week. Oil droplets were formed on the surface of the liquid to which no ultrasonic vibration was applied, but the liquid to which ultrasonic vibration was applied maintained a suspended state, and oil droplets were not formed. It was found from this that applying ultrasonic vibration enables a suspended state to be maintained stably without adding an alcohol.

### Method for devaluating proton conductivity of membrane prepared

A prepared membrane was immersed in distilled water at 25°C for 1 hour, while the surface thereof was wet with water this was sandwiched by two glass plates with a rectangular platinum electrode bonded thereto, with a parallel 2 cm gap between the electrodes. Subsequently, measurement of AC impedance at 100 Hz to 40 MHz was carried out, thus measuring the proton conductivity.

### Method for evaluation of methanol permeability of membrane prepared

A prepared membrane was immersed in distilled water at 25°C for 1 hour, this was held in the middle of an H-shaped glass cell having a structure that could be divided at the center, one side of the membrane was charged with distilled water, the other side was charged with 10% methanol, and it was left to stand while stirring the liquid. 30 minutes later the distilled water side was sampled, and the amount of methanol that had permeated was measured by a gas chromatograph. From this measurement value a methanol permeation flux at 25°C was calculated. The smaller the methanol permeation flux, the smaller the methanol permeation, which is preferable.

**(Table 1)**

| | Beginning | | After 25 m | | After 50 m | | Evaluation of preliminary experiment | |
|---|---|---|---|---|---|---|---|---|
| | Proton conductivity (kg/(m²·h)) | Methanol permeation flux (S/cm²) | Proton conductivity (kg/(m²·h)) | Methanol permeation flux (S/cm²) | Proton conductivity (kg/(m²·h)) | Methanol permeation flux (S/cm²) | Proton conductivity (kg/(m²·h)) | Methanol permeation flux (S/cm²) |
| Example 1 | 3.61 | 0.082 | 3.65 | 0.081 | 3.63 | 0.084 | 3.62 | 0.082 |
| Example 2 | 3.68 | 0.083 | 3.66 | 0.084 | 3.66 | 0.085 | 3.62 | 0.082 |
| Example 3 | 11.73 | 0.28 | 11.55 | 0.28 | 11.76 | 0.28 | 11.68 | 0.28 |
| Example 4 | 3.63 | 0.081 | 3.58 | 0.082 | 3.59 | 0.082 | 3.62 | 0.082 |
| Example 5 | 3.6 | 0.084 | 3.62 | 0.083 | 3.61 | 0.082 | 3.62 | 0.082 |
| Comp. Ex. 1 | 3.53 | 0.081 | 3.89 | 0.086 | 4.18 | 0.097 | 3.62 | 0.082 |
| Comp. Ex. 2 | 11.66 | 0.28 | 11.73 | 0.36 | 12.1 | 0.43 | 11.68 | 0.28 |
| Comp. Ex. 3 | Could not be measured due to insufficient impregnation | | Could not be measured due to insufficient impregnation | | Could not be measured due to insufficient impregnation | | 3.62 | 0.082 |
| Comp. Ex. 4 | Could not be measured due to insufficient impregnation | | Could not be measured due to insufficient impregnation | | Could not be measured due to insufficient impregnation | | 3.62 | 0.082 |

As is clear from the results in Table 1, in the Examples of the present invention, values for the proton conductivity and methanol permeation flux of the electrolyte membrane over 50 m are close to those of the electrolyte membrane obtained by the preliminary experiment, and variations thereof are small. On the other hand, in Comparative Examples 1 and 2 in which a drying step was not carried out after the surfactant treatment, the physical properties are close to those of the preliminary experiment at the beginning, but the performance gradually changes, suggesting that stability is lacking. Furthermore, in Comparative Examples 3 and 4, since the surfactant treatment is insufficient, the electrolyte membrane obtained had many places where filling with a functional polymer was insufficient, and evaluation could not carried out.

### Industrial Applicability

The method for producing a functional membrane of the present invention can preferably be used for producing a functional membrane material such as an electrolyte membrane for a fuel cell. In particular, a large effect can be obtained in terms of efficiency of production and improvement in the stability of performance of a membrane produced, which have conventionally been problems. In addition to an electrolyte membrane for a fuel cell, the functional membrane obtained in the present invention can be applied in various fields such as in medical separation membranes.

## Claims

1. A method for producing a functional membrane formed by filling pores of a porous substrate with a functional polymer, the method comprising at least steps (1) to (3) below,
(1) a step of depositing a surfactant on the surface of the pores of the porous substrate by impregnating the porous substrate with a suspension of the surfactant,
(2) a step of drying the porous substrate having the surfactant deposited thereon, and
(3) a step of impregnating the dried porous substrate with a functional polymer or a precursor thereof, or a solution thereof.

2. The method for producing a functional membrane according to Claim 1, wherein steps (1) to (3) are a continuous series of steps.

3. The method for producing a functional membrane according to Claim 1 or 2, wherein the suspension of a surfactant employs a liquid comprising at least 50 weight % of water.

4. The method for producing a functional membrane according to Claims 1 to 3, wherein the solution of a functional polymer or a precursor thereof employs a solvent comprising at least 50 weight % of water.

5. The method for producing a functional membrane according to Claims 1 to 4, wherein the suspension of a surfactant has a surfactant concentration of 0.001 to 5 weight %.

6. The method for producing a functional membrane according to Claims 1 to 5, wherein the functional polymer or the precursor thereof is a mixture of a monomer having both a polymerizable functional group and a protonic acid group in one molecule and a crosslinking agent having at least two polymerizable functional groups, or a polymer thereof.

7. The method for producing a functional membrane according to Claims 1 to 6, wherein the suspension of a surfactant is prepared by suspending the surfactant while applying ultrasonic vibration to a liquid.

8. The method for producing a functional membrane according to Claims 1 to 7, wherein in step (1), the porous substrate is impregnated with the suspension of a surfactant while applying ultrasonic vibration to the suspension.
